# EUROPEAN PATENT APPLICATION

(11) **EP 2 421 111 A2**
(43) Date of publication of application: **22.02.2012**
(21) Application number: 10176496.7
(22) Date of filing: 13.09.2010
(51) Int. Cl.: H02J 3/50

(54) **Grid-connected power conversion circuitry and power conversion method thereof**

(30) Priority: 16.07.2010 TW 099123581
(71) Applicant: Chung-Hsin Electric and Machinery Manufacturing Corp., Taipei County (TW)
(72) Inventor: Chang, Jin-Ming, 33383 Taoyuan County (TW); Sun, Yu-Ming, 33383 Taoyuan County (TW); Wu, Chi-Bin, 33383 Taoyuan County (TW)
(74) Representative: Lang, Christian

(57) **Abstract**

A grid-connected power conversion circuitry (20) and a power conversion method thereof are disclosed. A DC-DC converter (210) converts a renewable energy into a stable and constant DC power. A DC-AC inverter (220) inverts the DC power into an AC power. The duty cycle of the DC-DC converter (210) is adjusted based on a feedback signal related to the DC power, thereby stabilizing the output of the DC-DC converter (210). The duty cycle of the DC-AC inverter (220) is adjusted based on a feedback signal related to the AC power as well as the phase angle of grid power that is in turn detected by a phase angle processor (250). Consequently, the AC power can be synchronized with the grid power in frequency. Therefore, the grid system provides auxiliary power when the renewable energy is insufficient, and the AC power output by the DC-AC inverter (220) is synchronized with the grid power in frequency.

## Description

### Field of the Invention

The present invention relates to grid connection technology and, more particularly, to a grid-connected power conversion circuitry and a power conversion method thereof.

### Background of the Invention

Renewable energy refers to natural resources such as solar energy, wind energy, geothermal energy, hydraulic energy, tidal energy, biomass energy, and so on, that are derived from the natural world-theoretically inexhaustible and pollution-free during use. Therefore, it has been an important industrial development policy in technologically advanced countries to convert renewable energy effectively and economically into household electricity.

Grid connection technology plays a vital role in renewable energy power supply systems because, when a renewable energy power supply device fails to generate all the electricity required by the load or when the power supply device is out of order, power can be supplied to the load by grid power using grid connection technology. However, for the grid power to compensate for the insufficiency of electricity, the renewable energy must conform to the grid power in phase as well as in frequency. On the other hand, the electricity generated by the renewable energy power supply device in excess of the load requirement can be fed back to the power company.

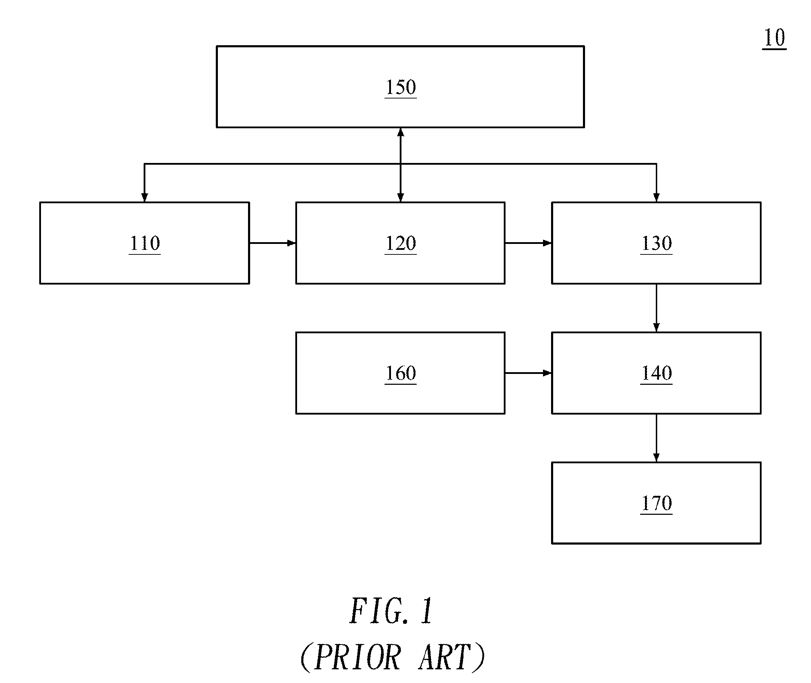

Fig. 1 is a schematic drawing of a conventional grid-connected renewable energy power supply system.

As shown in Fig. 1, a conventional grid-connected renewable energy power supply system 10 includes a renewable energy power supply device 110, a DC-DC converter 120, a DC-AC inverter 130, a relay 140, a controller 150, a grid power supply end 160, and a load 170.

The DC-DC converter 120 receives the renewable energy generated by the renewable energy power supply device 110 and converts the renewable energy into a stable and constant DC power. The DC-AC inverter 130 inverts the DC power output by the DC-DC converter 120 into an AC power. The controller 150 controls the operation of the renewable energy power supply device 110, the DC-DC converter 120, the DC-AC inverter 130, and the relay 140. The relay 140 switches between the DC-AC inverter 130 and the grid power supply end 160 according to the operation of the controller 150 so as to supply the AC power and/or grid power to the load 170.

In grid connection technology, the detection of the phase angle of an inverter and the phase angle of grid power is critical to efficiency. Conventionally, phase angle detection is carried out by a zero-point detection circuit or a digital phase-locked loop. The zero-point detection circuit is costly and subject to interference which may lead to wrong phase angle detection results. On the other hand, the digital phase-locked loop features fast response time and high precision but requires an intricately designed controller.

### Summary of the Invention

It is an object of the present invention to provide a grid-connected power conversion circuitry and a power conversion method thereof, wherein closed-loop voltage control is applied to a DC-DC converter and a DC-AC inverter to substantially downsize the circuitry, allow reliable maintenance, and enable precise detection and calculation of the phase angle of grid power.

To achieve the foregoing object, the present invention provides a grid-connected power conversion circuitry which includes: a first receiving end for receiving a renewable energy; a second receiving end for receiving grid power; a load end electrically connected to a load; a DC-DC converter having an input end electrically connected to the first receiving end so as to convert the renewable energy into a stable and constant DC power; a DC-AC inverter having an input end electrically connected to an output end of the DC-DC converter so as to receive the DC power and invert the DC power into an AC power; a switching unit electrically connected to an output end of the DC-AC inverter, the second receiving end, and the load end; a feedback circuit electrically connected to the output end of the DC-DC converter, the output end of the DC-AC inverter, and the second receiving end so as to provide a plurality of feedback signals related to the DC power, the AC power, and the grid power, respectively; a phase angle processor electrically connected to the feedback circuit so as to obtain the phase angle of the grid power via the feedback signal related to the grid power; a pulse modulator circuit electrically connected to a control end of the DC-DC converter and a control end of the DC-AC inverter; and a control module electrically connected to the switching unit, the feedback circuit, the phase angle processor, and the pulse modulator circuit, wherein the control module controls the pulse modulator circuit according to the feedback signal related to the DC power so as for the DC power output by the DC-DC converter to be stable and constant, it controls the pulse modulator circuit according to the feedback signal related to the AC power and the phase angle so as for the AC power output by the DC-AC inverter to be synchronized with the grid power in frequency, and controls switching of the switching unit according to the power requirement of the load. When the AC power is sufficient for the load, the switching unit electrically disconnects the second receiving end from the load end. However, when the AC power is insufficient for the load, the switching unit electrically connects the second receiving end to the load end.

To achieve the foregoing object, the present invention also provides a grid-connected power conversion method which includes the steps of: receiving a renewable energy; converting the renewable energy into a constant DC power by a DC-DC converter; adjusting the duty cycle of the DC-DC converter according to a feedback signal related to the DC power, so as for the DC power output by the DC-DC converter to be stable and constant; inverting the DC power into an AC power by a DC-AC inverter; detecting the phase angle of grid power by a phase angle processor; adjusting the duty cycle of the DC-AC inverter according to the phase angle and a feedback signal related to the AC power, so as for the AC power output by the DC-AC inverter to be synchronized with the grid power in frequency; and outputting the AC power to a load.

Implementation of the present invention at least provides the following advantageous effects:
1. The volume of the circuitry is significantly reduced.
2. Highly reliable maintenance is allowed.
3. The phase angle of grid power can be precisely detected and calculated.

A detailed description of the features and advantages of the present invention is given below so that a person skilled in the art is enabled to gain insight into the technical contents disclosed herein and implement the present invention accordingly. A person skilled in the art can easily understand the objects and advantages of the present invention by referring to the disclosure of the specification, the claims, and the accompanying drawings.

### Brief Description of the Drawings

Fig. 1 is a schematic drawing of a conventional grid-connected renewable energy power supply system;
Fig. 2 is a schematic drawing of a grid-connected power conversion circuitry according to a first embodiment of the present invention;
Fig. 3 schematically shows an embodiment of a phase angle processor;
Fig. 4 is a schematic drawing of a grid-connected power conversion circuitry according to a second embodiment of the present invention;
Fig. 5 is a flowchart of a grid-connected power conversion method according to the first embodiment of the present invention;
Fig. 6 is a flowchart of a grid-connected power conversion method according to the second embodiment of the present invention; and
Fig. 7 is a flowchart of a detection step.

### Detailed Description of the Invention

The present invention provides a grid-connected power conversion circuitry and a power conversion method thereof, wherein closed-loop voltage control is applied to a DC-DC converter and a DC-AC inverter. The DC-AC inverter is not activated until the output of the DC-DC converter is stabilized after feedback-adjustment. In addition, the duty cycle of the DC-AC inverter is feedback-controlled while the voltage frequency of grid power is detected, in order that the voltage output by the DC-AC inverter can be synchronized with the grid power in frequency.

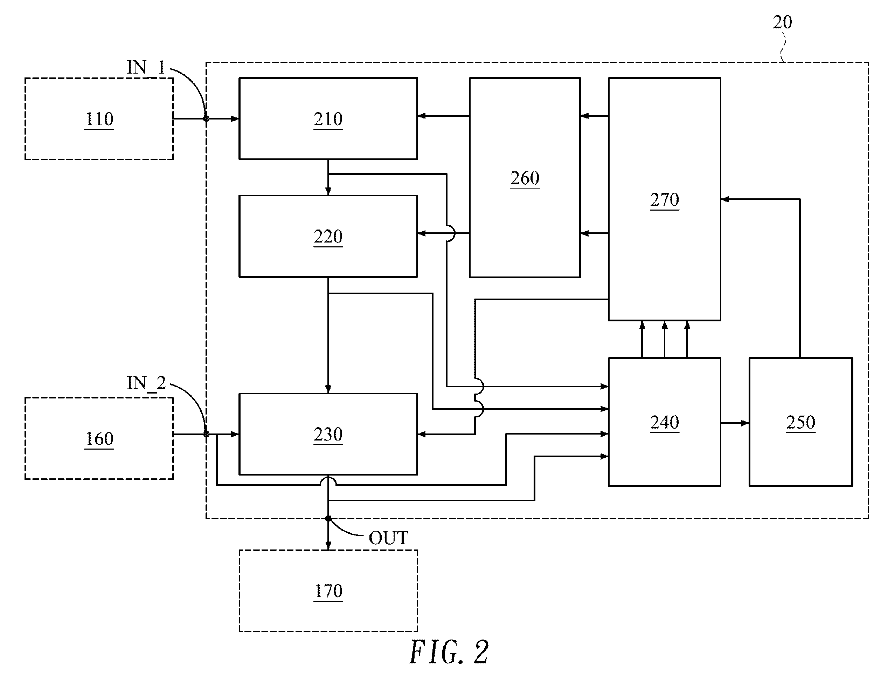

Fig. 2 schematically shows a grid-connected power conversion circuitry 20 according to a first embodiment of the present invention.

Referring to Fig. 2, the grid-connected power conversion circuitry 20 includes a first receiving end IN_1, a second receiving end IN_2, a load end OUT, a DC-DC converter 210, a DC-AC inverter 220, a switching unit 230, a feedback circuit 240, a phase angle processor 250, a pulse modulator circuit 260, and a control module 270.

The first receiving end IN_1 is electrically connected to a renewable energy power supply device 110 so as to receive the renewable energy generated thereby. The renewable energy power supply device 110 can be a fuel cell system but is not limited thereto.

The second receiving end IN_2 is electrically connected to a grid power supply end 160 so as to receive grid power therefrom.

The load end OUT is electrically connected to a load 170 so as to provide electricity thereto.

The DC-DC converter 210 has an input end electrically connected to the first receiving end IN_1 and an output end electrically connected to an input end of the DC-AC inverter 220. Meanwhile, the output end of the DC-AC inverter 220 is electrically connected to the switching unit 230. The switching unit 230 is further electrically connected to the second receiving end IN_2 and the load end OUT so as to make electrical connection with the grid power supply end 160 and the load 170 respectively. The switching unit 230 can be a relay.

The feedback circuit 240 is electrically connected to the output end of the DC-DC converter 210, the output end of the DC-AC inverter 220, and the second receiving end IN_2. The phase angle processor 250 is electrically connected between the feedback circuit 240 and the control module 270. The pulse modulator circuit 260 is electrically connected between the control module 270 and a control end of the DC-DC converter 210 and is electrically connected between the control module 270 and a control end of the DC-AC inverter 220.

The DC-DC converter 210 converts the renewable energy received through the first receiving end IN_1 into a stable and constant DC power and outputs the DC power to the DC-AC inverter 220. The DC-AC inverter 220 then inverts the received DC power into an AC power.

The feedback circuit 240 extracts the output of the DC-DC converter 210, the output of the DC-AC inverter 220, and the input of the second receiving end IN_2 so as to provide a feedback signal related to the DC power and a feedback signal related to the AC power to the control module 270 and a feedback signal related to the grid power to the phase angle processor 250. For instance, the feedback circuit 240 extracts the output voltage of the DC-DC converter 210, the output voltage of the DC-AC inverter 220, and the voltage waveform of the grid power and provides the output voltage of the DC-DC converter 210 and the output voltage of the DC-AC inverter 220 to the control module 270 and the voltage waveform of the grid power to the phase angle processor 250.

The control module 270 controls the pulse modulator circuit 260 according to the feedback signal related to the DC power so as for the DC-DC converter 210 to output a stable and constant DC power. More specifically, the control module 270 generates a control signal according to the feedback signal related to the DC power and supplies the control signal to the pulse modulator circuit 260. In response to the control signal, the pulse modulator circuit 260 issues a first adjustment command to the DC-DC converter 210 to adjust the duty cycle thereof.

For instance, in order for the pulse modulator circuit 260 to adjust the duty cycle of the DC-DC converter 210, the control module 270 controls the pulse modulator circuit 260 according to the output voltage of the DC-DC converter 210. The control module 270 compares the output voltage of the DC-DC converter 210 with a preset first voltage command value and, based on the difference therebetween, instructs the pulse modulator circuit 260 to generate the first adjustment command.

It should be pointed out that only after the DC-DC converter 210 has been adjusted to output a stable and constant voltage (i.e., the DC power) the control module 270 will instruct the pulse modulation circuit 260 to activate the DC-AC inverter 220. On the other hand, the phase angle processor 250 obtains the phase angle of the grid power from the feedback signal related to the grid power and outputs the phase angle to the control module 270. Based on the feedback signal related to the AC power and the phase angle of the grid power detected by the phase angle processor 250, the control module 270 instructs the pulse modulation circuit 260 to issue a second adjustment command to the DC-AC inverter 220, thereby adjusting the duty cycle of the DC-AC inverter 220 and enabling the DC-AC inverter 220 to output an AC power synchronized with the grid power in frequency.

More particularly, the control module 270 generates a control signal based on the feedback signal related to the AC power and the phase angle of the grid power and supplies the control signal to the pulse modulation circuit 260. In response to the control signal, the pulse modulation circuit 260 issues the second adjustment command to the DC-AC inverter 220 to adjust the duty cycle thereof. For instance, in order for the pulse modulation circuit 260 to adjust the duty cycle of the DC-AC inverter 220, the control module 270 controls the pulse modulation circuit 260 according to the output voltage of the DC-AC inverter 220 and the phase angle of the grid power, as detailed below.

The control module 270 compares the output voltage of the DC-AC inverter 220 with a preset second voltage command value and, based on the difference therebetween and the phase angle of the grid power, instructs the pulse modulation circuit 260 to issue the second adjustment command. On the other hand, the phase angle processor 250 obtains the phase angle of the voltage of the grid power from the feedback signal related to the grid power. More specifically, the phase angle processor 250 calculates the phase angle of the voltage of the grid power from the voltage waveform of the grid power.

In addition, the control module 270 controls the switching of the switching unit 230 according to the power requirement of the load 170. In a normal condition, the switching unit 230 electrically connects the output end of the DC-AC inverter 220 to the load end OUT, thus allowing the AC power output by the DC-AC inverter 220 to be supplied to the load 170 via the load end OUT. In other words, as long as the AC power output by the DC-AC inverter 220 is sufficient for the load 170, the switching unit 230 electrically disconnects the second receiving end IN_2 from the load end OUT.

However, when the AC power output by the DC-AC inverter 220 is insufficient for the load 170, the switching unit 230 electrically connects the second receiving end IN_2 to the load end OUT so as to supply the grid power to the load 170 and allow the grid power to fill in the gap between the AC power output by the DC-AC inverter 220 and the power requirement of the load 170. In other words, when the AC power output by the DC-AC inverter 220 is not enough for the load 170, the power requirement of the load 170 is covered jointly by the AC power output by the DC-AC inverter 220 and the grid power.

Thus, implementation of the present embodiment substantially reduces the volume of the circuitry, allows reliable maintenance, and provides precise detection and calculation of the phase angle of grid power.

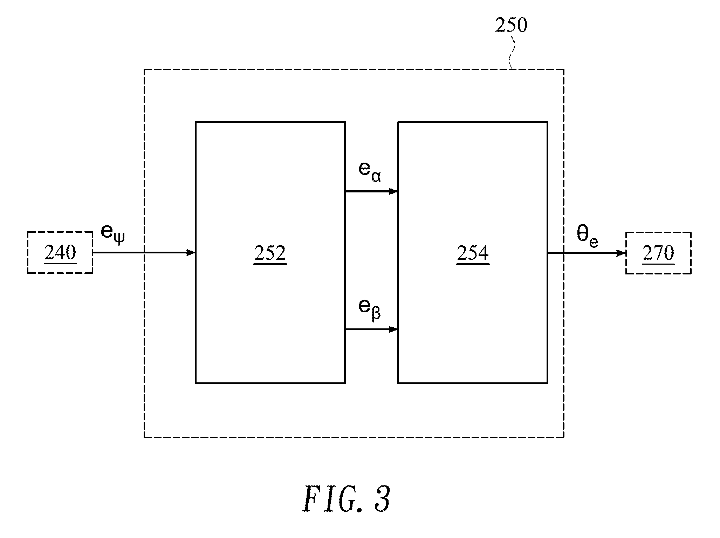

Fig. 3 schematically shows an embodiment of the phase angle processor 250, wherein the phase angle processor 250 includes an orthogonal transformer 252 and an arctangent calculation unit 254.

The orthogonal transformer 252 is electrically connected between the feedback circuit 240 and the arctangent calculation unit 254. The arctangent calculation unit 254 is electrically connected between the orthogonal transformer 252 and the control module 270.

The orthogonal transformer 252 receives from the feedback circuit 240 the feedback signal e_{Ψ} related to the grid power and generates accordingly a sine wave e_{α} which is synchronized with the grid power and a sine wave e_{β} which is 90 degrees out of phase with the grid power. The arctangent calculation unit 254 calculates the phase angle θₑ, of the grid power according to the sine wave e_{α}, which is synchronized with the grid power, and the sine wave e_{β}, which is 90 degrees out of phase with the grid power; and then outputs the phase angle θₑ, to the control module 270. More specifically, the arctangent calculation unit 254 calculates the phase angle θₑ, of the grid power by means of an arctangent function for the sine wave e_{α} synchronized with the grid power and the sine wave e_{β} 90 degrees out of phase with the grid power, wherein the sine waves e_{α} and e_{β} are orthogonal, i.e., 90 degrees out of phase with each other.

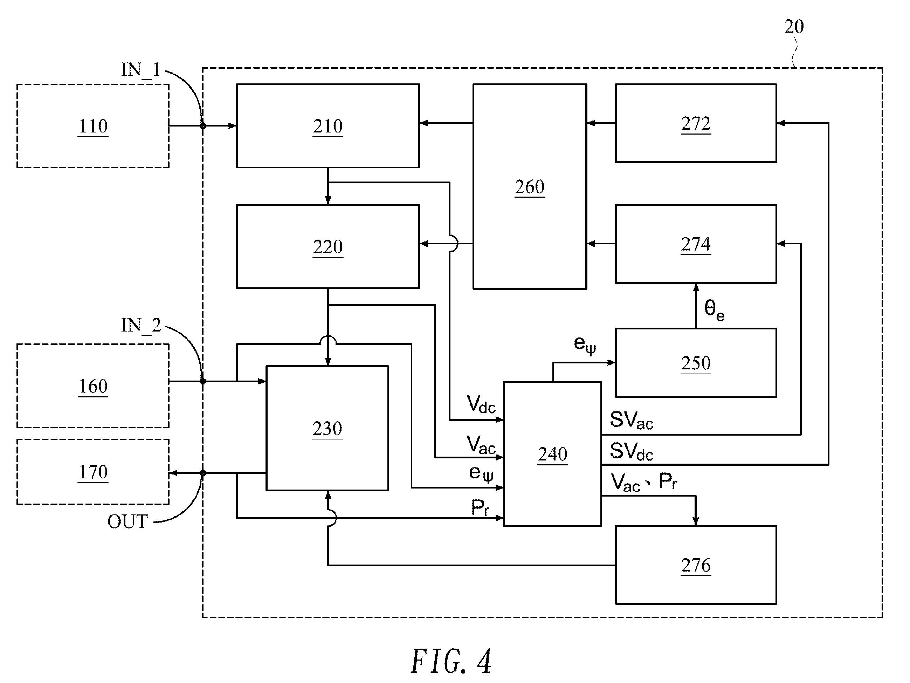

Fig. 4 is a schematic drawing of a grid-connected power conversion circuitry 20 according to a second embodiment of the present invention.

Referring to Fig. 4, the previously described control module 270 is now depicted as three separate controllers, namely a first controller 272, a second controller 274, and a third controller 276.

The first controller 272 has an input end electrically connected to the feedback circuit 240 and an output end electrically connected to the pulse modulation circuit 260. In other words, the first controller 272 is electrically connected between the feedback circuit 240 and the pulse modulation circuit 260. The first controller 272 controls the pulse modulation circuit 260 according to a feedback signal SV_{dc} related to the DC power so as for the DC-DC converter 210 to output a stable and constant DC power V_{dc} wherein the feedback signal SV_{dc} related to the DC power can be the output voltage of the DC-DC converter 210, i.e., the DC power V_{dc} output by the DC-DC converter 210.

The second controller 274 has input ends respectively and electrically connected to the feedback circuit 240 and the phase angle processor 250. The second controller 274 further has an output end electrically connected to the pulse modulation circuit 260. In other words, the second controller 274 is electrically connected between the feedback circuit 240 and the pulse modulation circuit 260 and between the phase angle processor 250 and the pulse modulation circuit 260.

The second controller 274 receives from the feedback circuit 240 a feedback signal SV_{ac} related to the AC power and receives from the phase angle processor 250 the phase angle θₑ of the voltage of the grid power. Thus, the second controller 274 controls the pulse modulation circuit 260 according to the received feedback signal SV_{ac} and the received phase angle θₑ so as for the DC-AC inverter 220 to output an AC power V_{ac} which is synchronized with the grid power in frequency. The feedback signal SV_{ac} related to the AC power can be the output voltage of the DC-AC inverter 220, i.e., the AC power V_{ac} output by the DC-AC inverter 220.

The third controller 276 has an input end electrically connected to the feedback circuit 240 and an output end electrically connected to the switching unit 230. In other words, the third controller 276 is electrically connected between the feedback circuit 240 and the switching unit 230. The third controller 276 controls switching of the switching unit 230 according to the power requirement Pr of the load 170. More specifically, the third controller 276 compares the AC power V_{ac} output by the DC-AC inverter 220 with the power requirement Pr of the load 170. If the AC power V_{ac} is insufficient for the power requirement Pr of the load 170, the third controller 276 instructs the switching unit 230 to make electrical connection between the second receiving end IN_2 and the load end OUT. Thus, the grid power received via the second receiving end IN_2 is supplied to the load 170 via the load end OUT.

Based on the circuit structure described above, the present invention also provides a grid-connected power conversion method as follows.

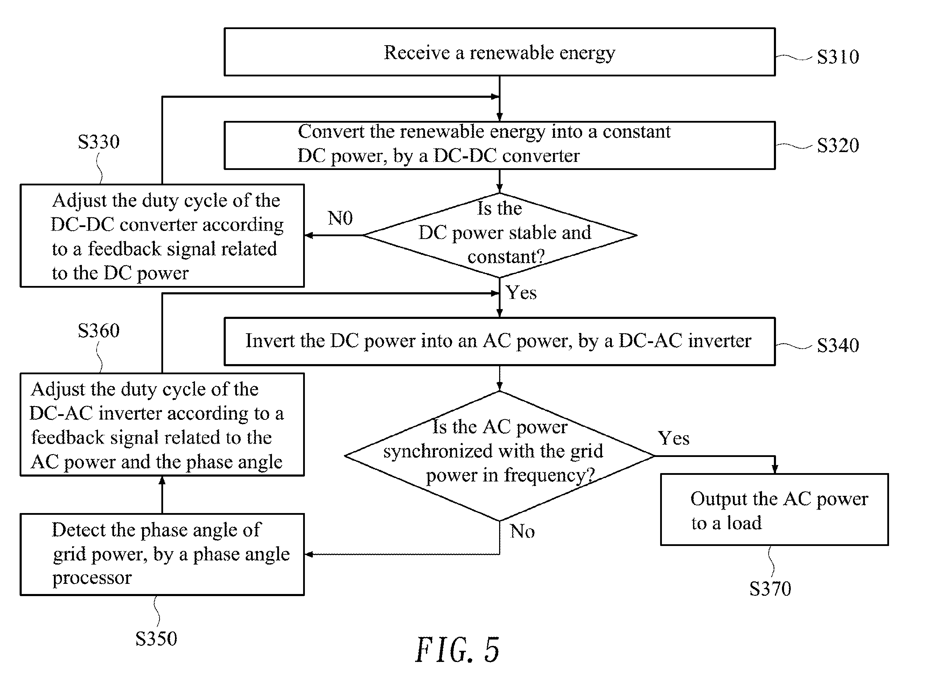

Referring to Fig. 5 for a flowchart of a grid-connected power conversion method according to the first embodiment of the present invention, the method includes the steps of: receiving a renewable energy (S310); converting the renewable energy into a constant DC power by a DC-DC converter (S320); adjusting the duty cycle of the DC-DC converter according to a feedback signal related to the DC power, so as for the DC power output by the DC-DC converter to be stable and constant (S330); inverting the DC power into an AC power by a DC-AC inverter (S340); detecting the phase angle of grid power by a phase angle processor (S350); adjusting the duty cycle of the DC-AC inverter according to a feedback signal related to the AC power and the phase angle, so as for the AC power output by the DC-AC inverter to be synchronized with the grid power in frequency (S360); and outputting the AC power to a load (S370).

Therein, the feedback signal related to the DC power can be the output voltage of the DC-DC converter, i.e., the DC power output by the DC-DC converter; and the feedback signal related to the AC power can be the output voltage of the DC-AC inverter, i.e., the AC power output by the DC-AC inverter. Furthermore, according to this grid-connected power conversion method, only after the DC power is rendered stable and constant the DC-AC inverter will invert the stable and constant DC power into an AC power, and only after the AC power is synchronized with the grid power in frequency the AC power will be output to the load.

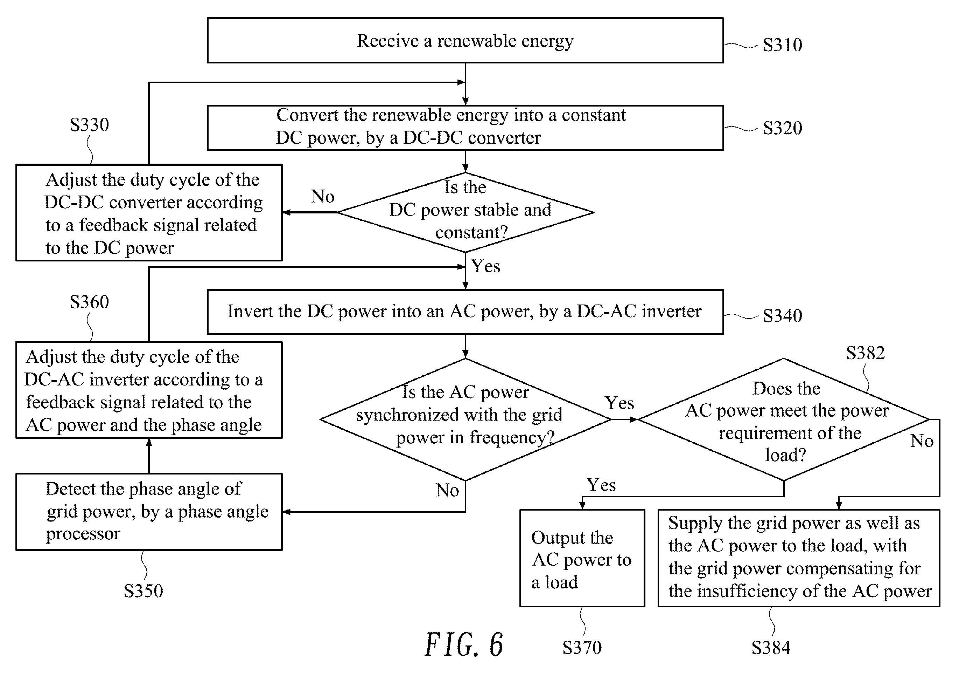

In addition, referring to Fig. 6, the grid power is selectively supplied to the load, depending on the power requirement of the load.

More particularly, a controller (i.e., the aforesaid third controller 276) compares the AC power output by the DC-AC inverter with the power requirement of the load (S382). If the AC power output by the DC-AC inverter is sufficient for the load, a switching unit electrically disconnects the grid power from the load, and in consequence the power requirement of the load is covered only by the AC power output from the DC-AC inverter (S370). However, if the AC power output by the DC-AC inverter is insufficient for the load, the switching unit electrically connects the grid power to the load so as to supply the grid power to the load (S384).

The grid power may serve only to fill in the gap between the AC power output by the DC-AC inverter and the power requirement of the load. In other words, when the AC power output by the DC-AC inverter is not enough for the load, the grid power is supplied to the load along with the AC power output by the DC-AC inverter. Thus, while the DC-AC inverter still outputs the AC power to the load, the part of the power requirement that the AC power fails to satisfy is covered by the grid power (S384). In a nutshell, depending on the power requirement of the load, the grid power is selectively supplied to the load to cover the power requirement jointly with the AC power output by the DC-AC inverter.

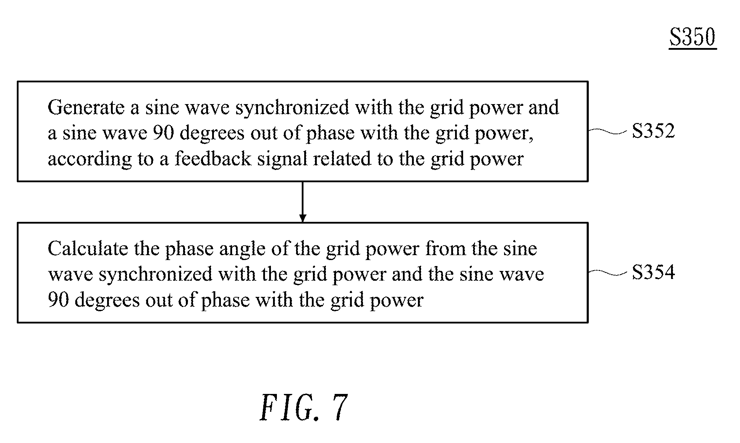

On the other hand, the phase angle of the grid power is detected by extracting the voltage waveform of the grid power. Referring to Fig. 7, the phase angle detection step (S350) further includes: generating a sine wave which is synchronized with the grid power and a sine wave which is 90 degrees out of phase with the grid power, according to a feedback signal related to the grid power (S352); and calculating the phase angle of the grid power from the sine wave synchronized with the grid power and the sine wave 90 degrees out of phase with the grid power (S354).

Therein, the feedback signal related to the grid power can be the voltage waveform of the grid power. For instance, to carry out the step of sine wave generation (S352), an orthogonal transformer receives from a feedback circuit the voltage waveform of the grid power and, according to the received voltage waveform, generates orthogonal sine waves that are synchronized with the grid power. Then, in order to carry out the step of phase angle calculation (S354), an arctangent calculation unit calculates the phase angle of the grid power by means of an arctangent function for the sine waves synchronized with the grid power.

According to the above description, implementation of the present embodiment not only reduces the volume of a grid-connected power conversion circuitry but also is highly reliable. In addition, by precisely extracting sine waves that are synchronized with grid power, the phase angle of the grid power can be accurately detected and calculated, thus allowing a renewable energy to be synchronized with the grid power in frequency.

The embodiments described above serve to demonstrate the features of the present invention so that a person skilled in the art can understand the contents disclosed herein and implement the present invention accordingly. The embodiments, however, are not intended to limit the scope of the present invention. Therefore, all equivalent changes or modifications which do not depart from the spirit of the present invention should fall within the scope of the present invention, which is defined only by the appended claims.

## Claims

1. A grid-connected power conversion circuitry (20), comprising:
a first receiving end (IN_1) for receiving a renewable energy;
a second receiving end (IN_2) for receiving grid power;
a load end (OUT) electrically connected to a load (170);
a DC-DC converter (210) having an input end electrically connected to the first receiving end (IN_1), the DC-DC converter (210) being configured to convert the renewable energy into a stable and constant DC power;
a DC-AC inverter (220) having an input end electrically connected to an output end of the DC-DC converter (210), the DC-AC inverter (220) being configured to receive the DC power and invert the DC power into an AC power;
a switching unit (230) electrically connected to an output end of the DC-AC inverter (220), the second receiving end (IN_2), and the load end (OUT);
a feedback circuit (240) electrically connected to the output end of the DC-DC converter (210), the output end of the DC-AC inverter (220), and the second receiving end (IN_2), the feedback circuit (240) being configured to provide a plurality of feedback signals related to the DC power, the AC power, and the grid power, respectively;
a phase angle processor (250) electrically connected to the feedback circuit (240) and configured to obtain a phase angle of the grid power from the feedback signal related to the grid power;
a pulse modulation circuit (260) electrically connected to a control end of the DC-DC converter (210) and a control end of the DC-AC inverter (220); and
a control module (270) electrically connected to the switching unit (230), the feedback circuit (240), the phase angle processor (250), and the pulse modulation circuit (260), the control module (270) being configured to: control the pulse modulation circuit (260) according to the feedback signal related to the DC power so as for the DC power output by the DC-DC converter (210) to be stable and constant; control the pulse modulation circuit (260) according to the feedback signal related to the AC power and the phase angle so as for the AC power output by the DC-AC inverter (220) to be synchronized with the grid power in frequency; and control switching of the switching unit (230) according to a power requirement of the load (170);
wherein the switching unit (230) electrically disconnects the second receiving end (IN_2) from the load end (OUT) when the AC power is sufficient for the load (170), and the switching unit (230) electrically connects the second receiving end (IN_2) to the load end (OUT) when the AC power is insufficient for the load (170).

2. The grid-connected power conversion circuitry (20) of claim 1, wherein the phase angle processor (250) comprises:
an orthogonal transformer (252) electrically connected to the feedback circuit (240) and configured to receive the feedback signal related to the grid power and generate accordingly a sine wave which is synchronized with the grid power and a sine wave which is 90 degrees out of phase with the grid power; and
an arctangent calculation unit (254) electrically connected between the orthogonal transformer (252) and the control module (270) and configured to calculate the phase angle of the grid power from the sine wave which is synchronized with the grid power and the sine wave which is 90 degrees out of phase with the grid power.

3. The grid-connected power conversion circuitry (20) of claim 1, wherein the control module (270) comprises:
a first controller (272) having an input end electrically connected to the feedback circuit (240) and an output end electrically connected to the pulse modulation circuit (260), the first controller (272) being configured to control the pulse modulation circuit (260) according to the feedback signal related to the DC power so as for the DC power output by the DC-DC converter (210) to be stable and constant;
a second controller (274) having input ends respectively and electrically connected to the feedback circuit (240) and the phase angle processor (250) and an output end electrically connected to the pulse modulation circuit (260), the second controller (274) being configured to control the pulse modulation circuit (260) according to the feedback signal related to the AC power and the phase angle so as for the AC power output by the DC-AC inverter (220) to be synchronized with the grid power in frequency; and
a third controller (276) having an input end electrically connected to the feedback circuit (240) and an output end electrically connected to the switching unit (230), the third controller (276) being configured to control switching of the switching unit (230) according to the power requirement of the load (170).

4. The grid-connected power conversion circuitry (20) of claim 1, wherein the switching unit (230) is a relay.

5. A grid-connected power conversion method, comprising steps of:
receiving a renewable energy;
converting the renewable energy into a constant DC power, by a DC-DC converter;
adjusting a duty cycle of the DC-DC converter according to a feedback signal related to the DC power, so as for the DC power output by the DC-DC converter to be stable and constant;
inverting the DC power into an AC power, by a DC-AC inverter;
detecting a phase angle of grid power, by a phase angle processor;
adjusting a duty cycle of the DC-AC inverter according to the phase angle and a feedback signal related to the AC power, so as for the AC power output by the DC-AC inverter to be synchronized with the grid power in frequency; and
outputting the AC power to a load.

6. The grid-connected power conversion method of claim 5, further comprising a step of:
selectively supplying the grid power to the load according to a power requirement of the load.

7. The grid-connected power conversion method of claim 6, wherein the step of selectively supplying the grid power to the load according to a power requirement of the load comprises:
comparing the AC power with the power requirement of the load; and
supplying the grid power to the load if the AC power cannot meet the power requirement of the load.

8. The grid-connected power conversion method of claim 5, wherein the step of detecting a phase angle of grid power by a phase angle processor comprises:
generating a sine wave which is synchronized with the grid power and a sine wave which is 90 degrees out of phase with the grid power, according to a feedback signal related to the grid power; and
calculating the phase angle of the grid power from the sine wave which is synchronized with the grid power and the sine wave which is 90 degrees out of phase with the grid power.
